# EUROPÄISCHE PATENTSCHRIFT

(11) **EP 1 955 024 B1**
(45) Veröffentlichungstag und Bekanntmachung des Hinweises auf die Patenterteilung: **10.04.2013**
(21) Anmeldenummer: 06806109.2
(22) Anmeldetag: 09.10.2006
(51) Int. Cl.: G01F 23/26

(54) **SENSOR ZUR BERÜHRUNGSLOSEN DETEKTION DES FÜLLSTANDES EINES FLÜSSIGEN UND ANHAFTENDEN MEDIUMS HOHER LEITFÄHIGKEIT, INSBESONDERE BLUT, DURCH EINE NICHTMETALLISCHE WAND EINES BEHÄLTERS SOWIE ENTSPRECHENDES VERFAHREN**
SENSOR FOR THE CONTACTLESS DETECTION OF THE LEVEL OF AN ADHERING LIQUID MEDIUM OF HIGH-CONDUCTIVITY, ESPECIALLY BLOOD, THROUGH A NON-METALLIC WALL OF A CONTAINER AND CORRESPONDING METHOD
CAPTEUR POUR DÉTECTER SANS CONTACT LE NIVEAU D'UNE SUBSTANCE LIQUIDE ET ADHÉRENTE DE CONDUCTIVITÉ ÉLEVÉE, EN PARTICULIER DU SANG, À TRAVERS D'UNE PAROI NON MÉTALLIQUE D'UN RÉCIPIENT, ET PROCÉDÉ CORRESPONDANT

(30) Priorität: 30.11.2005 DE 102005057558
(43) Veröffentlichungstag der Anmeldung: 13.08.2008
(73) Patentinhaber: Sie Sensorik Industrie-Elektronik GmbH, 68519 Vierheim (DE)
(72) Erfinder: WINKENS, Frank, 67067 Ludwigshafen (DE)
(74) Vertreter: Mierswa, Klaus
(86) Internationale Anmeldenummer: PCT/EP2006/009725
(87) Internationale Veröffentlichungsnummer: WO 2007/062714

(56) Entgegenhaltungen:
- DE-A1- 19 949 985
- GB-A- 2 040 464

## Beschreibung

### Technisches Gebiet:

Die Erfindung betrifft einen Sensor und ein Verfahren zur berührungslosen Detektion des Füllstandes eines flüssigen und anhaftenden Mediums hoher Leitfähigkeit, insbesondere Blut, durch eine nichtmetallische Behälterwand eines Behälters, gemäß den Oberbegriffen der Ansprüche 1 und 7 sowie der Verfahrensansprüche 10 und 11.

### Stand der Technik:

Vielfältig bekannt und im Einsatz sind kapazitive Sensoren zur berührungslosen Detektion von Füllständen flüssiger Medien oder von Feststoffen (Granulat, Pulver) durch nicht metallische Behälterwände. Der Sensor ist hierbei i.d.R. an der Behälteraußenwand montiert und liefert ein Schaltsignal sobald der innere Füllstand den Bereich der "aktiven" Fläche des Sensors über- oder unterschreitet. Bei diesem Prinzip wird immer das aktive elektrische Feld des Sensors durch das zu erfassende Medium beeinflusst.

Dem physikalischen Grundprinzip liegt hierbei immer der Plattenkondensator bzw. der "geometrisch aufgeweitete" Plattenkondensator zu Grunde. Die aktive Fläche des Sensors entspricht der einen Platte des Kondensators, während das allgemeine Erdpotential bzw. Massepotential die Gegenseite bzw. andere Platte darstellt. Die Behälterwandung und insbesondere das zu erfassende Medium besitzen eine Dielektrizitätskonstante εᵣ, die bekanntlich immer wesentlich größer ist als diejenige von Luft. Das εᵣ eines zu erfassenden Mediums führt somit zu einer Erhöhung der Gesamtkapazität des Plattenkondensators, sobald es in den Bereich der aktiven Fläche eines Sensors gelangt. Wird ein bestimmter, am Sensor voreingestellter Kapazitätswert überschritten so gibt der Sensor ein Schaltsignal ab.

Zur Detektion der meist geringen Kapazitätsänderungen in der Größenordnung unter 1 pf sind verschiedene elektronische Verfahren gebräuchlich und Stand der Technik. Als oberstes Unterscheidungskriterium spalten sich diese Verfahren in fremdgesteuerte und oszillatorische Verfahren:

Bei den fremdgesteuerten Verfahren taktet meist ein Rechteckgenerator eine spezielle Messschaltung, wie in den DE 19701899-A1 oder DE 19945330-A1 beschrieben. Diese Verfahren erfüllen meist höhere EMV-Anforderungen, sind aber in ihrer Empfindlichkeit und besonders in Hinsicht auf eine spezielle, weiter unten erläuterte Problematik vieler Anwendungen der Füllstandsmessung überfordert.

Bei den oszillatorischen Verfahren wird in den meisten Fällen die Schwingbedingung eines speziellen Oszillators über ein Elektrodensystem durch die Messkapazität beeinflusst. Je nach Ausführungsform fängt bei Erreichen eines gewissen voreingestellten Kapazitätswertes ein solcher Oszillator gerade an zu schwingen oder stellt umgekehrt seine Schwingung ein. Das Vorhandensein des Schwingsignals bzw. die Änderung der Schwingamplitude werden hierbei ausgewertet. Da die Schwelle zwischen Schwingen und Nichtschwingen rein mathematisch betrachtet (Schwingbedingung) unendlich gering ist, können mit geringem Aufwand hiermit relativ große Empfindlichkeiten erreicht werden. Die Grundlagen dieses Prinzips wurden Ende der 60er-Jahre von Herrn Schaller in DE 16 73 841 C3 patentiert und werden heute immer noch in den meisten kapazitiven Sensoren eingesetzt. Ein wesentlicher Nachteil oszillatorischer Verfahren besteht aber grundsätzlich in der sehr hohen Störempfindlichkeit (EMV) gegenüber elektrischen Wechselfeldern innerhalb einer großen Frequenzbandbreite, insbesondere im Bereich nahe der Schwingfrequenz.

Bei der Abfrage von Füllständen, dem inzwischen größten Anwendungsgebiet für kapazitive Sensoren (Tendenz steigend) sind physikalisch zwei Anwendungsbereiche zu unterscheiden:
1. Medien ohne Leitfähigkeit und ohne Dipolcharakter der Molekühlstruktur (Öl, Kunststoffgranulat, Pulver, Feststoffe).
2. leitfähige, flüssige Medien (Wasser, Säuren, Laugen, Blut, Gemische davon und andere Chemikalien).

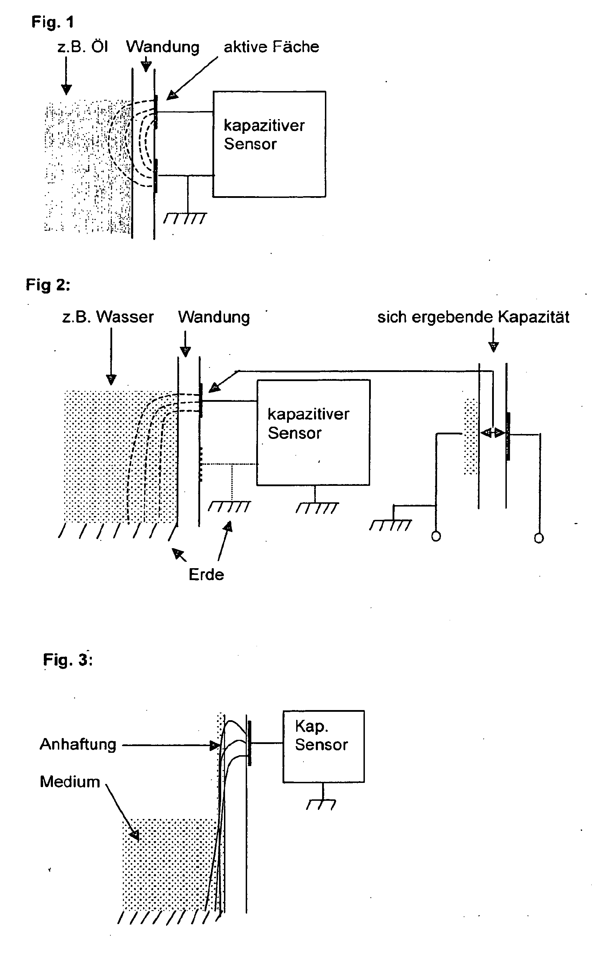

Im Fall 1 erhöht sich durch die Einbringung des Mediums in den aktiven Bereich eines kapazitiven Sensors einfach die Gesamtdielektrizitätszahl εᵣ Behälterwand + εᵣ Medium und somit die Gesamtkapazität des "aufgeweiteten" Plattenkondensators zwischen der aktiven Fläche und der eigenen Masse (oft auch als zweite Elektrode ausgeführt). Dies ist in Figur 1 dargestellt.

Die Feldlinien verlaufen hierbei größtenteils direkt zwischen den beiden aufgeweiteten Kondensatorplatten bzw. Elektroden durch die Behälterwand und durch das abzufragende Medium. Detektiert wird nur der εᵣ -Zuwachs durch das Medium. Bildet das nichtleitfähige Medium dünne Filme bzw. Anhaftungen an der Behälterinnenwand so ist deren εᵣ viel geringer als das εᵣ des vollen Gefäßes, weil die Feldlinien großteils durch die Luft und nicht durch das Medium laufen. In der Praxis wird daher die Füllstandsüberwachung solcher Medien durch die bestehende Technik meist befriedigend gelöst. Begrenzt werden solche Anwendungen höchstens durch zu dicke Behälterwände bei zu geringem εᵣ eines Mediums oder durch EMVtechnische Aspekte.

Andere physikalische Bedingungen ergeben sich bei leitfähigen Medien (Fall2) welche in der Praxis mit großem Abstand am häufigsten vorkommen.

Bei hohen Leitfähigkeiten wirkt quasi das Medium selbst als zweite Kondensatorplatte bzw. als Gegenpol zur aktiven Fläche. Detektiert wird eigentlich nicht mehr das εᵣ des Mediums selbst, sondern die Kapazität zwischen aktiver Sensorfläche und dem leitfähigem Medium auf der Gegenseite! Das Medium wirkt wie eine geerdete Metallplatte oder ein geerdeter, den Behälter ausfüllenden Metallklotz. Dies ist in Figur 2 dargestellt. Die Erdverbindung kommt bei großen Gefäßen bzw. großvolumigen Füllmengen durch die hohe Kapazität der Flächenbildung der Flüssigkeit gegen den "Raum" und den Boden, auf welchem der Behälter steht, zustande. Das Medium selbst stellt aufgrund seiner elektrischen Leitfähigkeit einfach eine elektrisch leitfähige Verbindung zu diesen großflächigen Erdkapazitäten her.

An der aktiven Fläche ergeben sich daher viel höhere Kapazitätsunterschiede als in Fall 1, sobald der Füllstand die aktive Sensorfläche erreicht. Dies liegt daran dass sich im Ersatzschaltbild fast ein idealer Plattenkondensator mit sich gegenüber stehenden Platten und dem dazwischen liegendem εᵣ der Behälterwand einstellt, sofern die Kopplung des Mediums gegen Erde groß genug ist, Figur 2 rechter Teil.

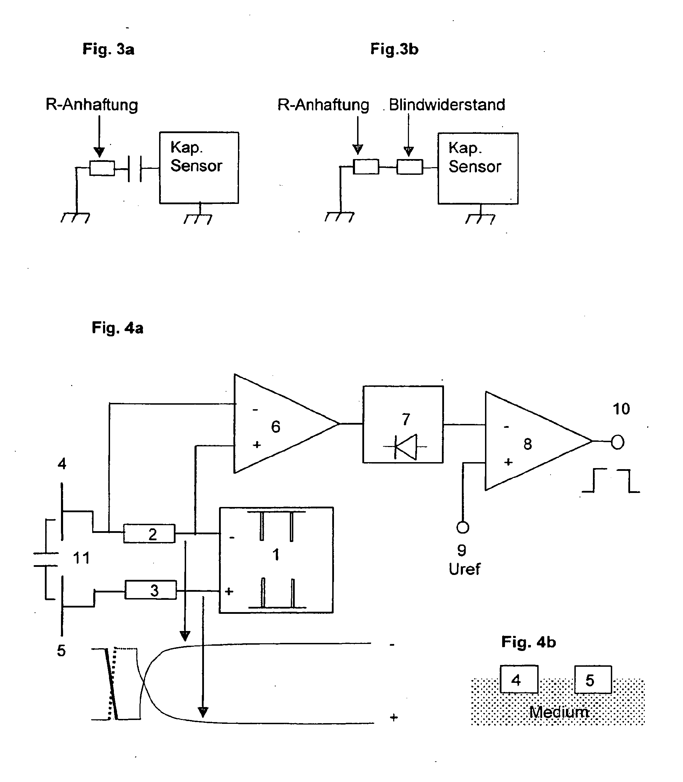

In der Praxis neigen viele leitfähige Medien ohne Oberflächenspannung zur Bildung von dünnen Filmen, Schäumen oder gar dickeren Anhaftungen an der Behälterinnenseite, wenn diese vom Medium vorher benetzt wurde. Diese Anhaftungen werden von kapazitiven Sensoren nach dem Stand der Technik in vielen Fällen genauso stark detektiert wie der volle Füllzustand. Sinkt der Füllstand weit unter den aktiven Sensorbereich bleibt dies dann unerkannt. Die Anwendung funktioniert nicht oder nur sehr unsicher. Die leitfähige Anhaftung wirkt dann fast direkt wie eine Metallplatte, die über die Flüssigkeit weiterhin geerdet ist und der in Figur 2 beschriebene Plattenkondensator bleibt weitestgehend erhalten, obwohl kein echter Füllstand mehr vorliegt. Dies ist ein großes Grundproblem der kapazitiven Füllstandsmessung, Figur 3.

Dünne Schichten eines leitfähigen Mediums weisen jedoch geringere Leitfähigkeiten bzw. größere elektrische Widerstände auf als das kompakte Medium, weil die Stromdichte zunimmt bzw. mehr Elektronen durch ein kleineres Volumen fließen müssen. Alle kapazitiven Verfahren arbeiten mit Wechselspannung bzw. Wechselstrom und somit elektrischen Wechselfeldern. Durch den Plattenkondensator bzw. die Koppelkapazität zwischen aktiver Fläche und dem Medium oder der Anhaftung ergibt sich somit ein frequenzabhängiger kapazitiver Blindwiderstand.

Im Ersatzschaltbild lässt sich dies vereinfacht durch eine Reihenschaltung von idealem Plattenkondensator mit dem Widerstand des Anhaftungsfilms bzw. einer Reihenschaltung von Blindwiderstand mit dem Widerstand des Anhaftungsfilms darstellen, Figuren 3 a+b.

In Figur 3 wurde ein viel kleinerer Widerstand des Kompaktmediums und eine hinreichend große Erdkapazität vorausgesetzt und somit diese Größen vernachlässigt.

Figur 3b zeigt, dass als Grundvoraussetzung der Blindwiderstand hinreichend klein genug werden muss, damit der Sensor den Widerstand R-Anhaftung von einem Kurzschluss zur Erde unterscheiden kann. Ebenso muss genügend "Erdbezug" herrschen. Der kapazitive Blindwiderstand gehorcht der Beziehung Rb=1/2nfC. Somit müsste die Arbeitsfrequenz f hinreichend groß werden!

Bei kapazitiven Sensoren nach dem Stand der Technik liegen die Arbeitsfrequenzen bei maximal 2 Mhz. Hierdurch ergeben sich je nach Applikation Blindwiderstände bis höchstens 100KOhm oder größer. Die Widerstände kritischer Anhaftungsfilme können aber Werte unter 1 KOhm bis zu wenigen 100 Ohm pro cm haben. Die Arbeitsfrequenz kann aber nicht beliebig hoch gesetzt werden, weil die Abstrahlung bzw. Emissionen des Sensors unzulässig zunehmen. Ferner wird der "geschlossene Stromkreislauf" zur Erde gestört, weil der hochfrequente Wechselstrom größtenteils über die mit induktiven Charakter versehene Sensorzuleitung abfließen muss. Dies führt zu Fehlfunktionen. Außerdem werden die Normen des EMV-Gesetzes nicht mehr eingehalten.

Durch die GB 2 040 464 A ist eine Vorrichtung zur Feststellung des Flüssigkeitspegels in einem nichtmetallischen Tank bekannt geworden, welche ein Paar von parallel und senkrecht angeordnete Platten mit einem daran angeschlossenen Oszillator aufweist, die auf der Außenseite des Tanks angeordnet sind, um einen Kontakt mit der innen befindlichen Flüssigkeit zu vermeiden. Dem Ansteigen der Flüssigkeit im Tank steht eine anwachsende Fläche der Platten gegenüber. Die Änderung der Kapazität zwischen den Platten als Funktion des Flüssigkeitsspiegels wird dazu benutzt, um ein entsprechendes elektrisches Signal zu erzeugen. Die bei hochviskosen Flüssigkeiten durch den innen an der Behälterwand befindlichen Flüssigkeitsfilm entstehenden Probleme werden durch den Einsatz eines Rechteck-Treibersignal hoher Frequenz dergestalt gelöst, dass die kapazitive Komponente des Stromes zwischen den Elektroden groß ist gegenüber der Widerstandskomponente. Das resultierende Signal wird verstärkt und ausgewertet. Die GB 2 040 464 A, offenbart damit einen kapzitiven Füllstand-Sensor für leitfähige Flüssigkeiten, bei dem der Messwert mittels eines Differenzenverstärkers an einem niederohmigen Widerstand abgegriffen wird, der im Versorgungskreis zweier Füllstand-Messelektroden angeordnet ist.

Durch die DE 199 49 985 A1 ist ein oszillatorisches Verfahren und ein Sensor bekannt geworden, die diese Problematik gegenüber dem Stand der Technik verbessert. Ein kapazitiver Sensor dient zur Detektion des Füllstandes eines Mediums in einem Behälter mit nichmetallischer Behälterwand, umfassend einen Verstärker und eine erste Elektrode, die an den Eingang des Verstärkers angeschlossen ist und gegenüber Masse mit einer ersten Kapazität behaftet ist, so dass der Eingang des Verstärkers kapazitiv belastet ist. Die Elektrode ist so angeordnet, dass das durch das Signal zwischen der Elektrode und Masse entstehende elektrische Feld im wesentlichen durch den Behälter und das Medium verläuft, so dass die Größe der ersten Kapazität einerseits mit zunehmendem Füllstand des Mediums in dem Behälter anwächst und andererseits durch die kapazitiven Eigenschaften des Behälters beeinflusst ist. Eine zweite Elektrode ist an den Ausgang des Verstärkers eine dritte Elektrode an den Eingang des Verstärkers angeschlossen, wobei sich die zweite und die dritte Elektrode in einem Abstand zueinander befinden und so positioniert sind, dass zwischen ihnen eine zweite Kapazität besteht, deren Größe wesentlich durch die kapazitiven Eigenschaften des Behälters und nur unwesentlich durch den Füllstand des Mediums im Behälter beeinflusst ist und die eine kapazitive Rückkopplung des Verstärkers darstellt. Ein Kondensator weist eine dritte Kapazität auf, wobei die eine Elektrode des Kondensators an den Ausgang und die andere an den Eingang des Verstärkers angeschlossen ist, so dass der Kondensator parallel zu der zweiten Kapazität ebenfalls eine kapazitive Rückkopplung des Verstärkers darstellt. Die Kapazität des Kondensators ist so gewählt, dass der Verstärker aufgrund der kapazitiven Rückkopplung nur dann oszilliert, wenn der Füllstand des Mediums im Behälter und damit die erste Kapazität jeweils unterhalb einer bestimmten Schwelle liegen, wobei die zweite Kapazität dem den Eingang des Verstärkers belastenden kapazitiven Einfluss des Behälters entgegenwirkt, so dass der kapazitive Einfluss des Behälters reduziert ist.

Dieses Verfahren arbeitet im Frequenzbereich von 5 bis 10 MHz und kompensiert somit über die zweite Elektrode die Behälterwandkapazität sowie Anhaftungen und
Filme des Mediums. Hiermit können Applikationen gelöst werden, die bis dahin mit kapazitiven Sensoren nicht möglich waren. Eine Arbeitsfrequenz von ca. 10Mhz stellt jedoch in Bezug auf das oben erwähnte EMV-Gesetz und Funktionsproblematik eine absolute Obergrenze dar.

Deshalb lassen sich hiermit Füllstände anhaftender Medien nur bis zu einer Leitfähigkeit der Größenordnung bis ca 5 ms/cm handhaben. Ferner benötigt diese Technik absoluten Erdbezug. Bei kleinen Gefäßen und Flüssigkeitsmengen ergeben sich hierdurch Probleme. Die Füllstände werden nicht mehr erkannt oder der Schaltpunkt wird erheblich durch die Position des Gefäßes im Raum oder durch Berührung der Messanordnung durch Personen beeinflusst (künstliche Erdung). Außerdem ist dieses Verfahren innerhalb einer gewissen Frequenzbandbreite anfällig für Störspannungen (EMV-G).

In vielen Anwendungen, wie z.B. der Medizintechnik, werden höhere Anforderungen gestellt. In einer kritischen und zugleich wichtigen Anwendung, nämlich der Abfrage von Füllständen von Blut, z.B. in Dialysegeräten oder Herz-Lungen-Maschinen, werden bis heute keine kapazitiven Sensoren eingesetzt. Blut neigt nämlich auf Grund seiner Konsistenz und Beschaffenheit zur Bildung von Schäumen und dickschichtigen Anhaftungen in Schläuchen oder Gefäßen und besitzt einen hohen Leitwert. Ferner gelten in der Medizintechnik erhöhte Anforderungen an die Störfestigkeit (EMV) und die Funktionssicherheit der Technik.

### Technische Aufgabe:

Der Erfindung liegt die Aufgabe zugrunde, einen Sensor und ein Verfahren der eingangs genannten Gattung derart zu verbessern, dass auch Leitfähigkeiten oberhalb einer Größenordnung von cirka 5 ms/cm sicher detektiert werden können und die Position des Gefäßes im Raum oder die Berührung der Messanordnung durch Personen keine Beeinflussung des Messergebnisses verursachen.

### Offenbarung der Erfindung sowie deren Vorteile:

Die Lösung dieser Aufgabe ist bei einem Sensor zur berührungslosen Detektion des Füllstandes eines flüssigen und anhaftenden Mediums hoher Leitfähigkeit, insbesondere Blut, durch eine nichtmetallische Behälterwand eines Behälters mit mindestens einer Elektrode, dadurch gekennzeichnet dass ein Impulsgenerator, welcher mit zueinander invertierten und nichtinvertierten exakt gegenphasig zueinander kurzen Pulsen über zwei gleichwertige niederohmige Widerstände zwei gleiche, nebeneinander und auf gleicher Höhe zum Füllstand des Mediums angeordnete und an der Behälterwand außen angebrachte Elektroden ansteuert sowie durch einen schnellen Differenzverstärker hoher Gleichtaktunterdrückung , welcher einen durch den füllstandsabhängigen Impulsstrom verursachten Spannungsabfall an dem einen der beiden Widerstände, Messwiderstand, abgreift, diesen Spannungsabfall um einen festen Faktor verstärkt und einem nachgeschalteten Spitzenwertdetektor mit Siebung zur Gewinnung einer füllstandsabhängigen Gleichspannung sowie einem nachgeschalteten Spannungskomparator zuführt, welcher durch Vergleich der Ausgangsspannung des Spitzenwertdetektors mit einer einstellbaren Sollspannung ein Schaltsignal generiert, welches vom "Low-Zustand" zum "High-Zustand" wechselt, sobald durch einen steigenden Füllstand die Elektroden hinreichend bedeckt sind und umgekehrt, wenn der Füllstand unter die Elektroden sinkt oder invers auf die Änderung des Füllstandes reagiert, sobald die Polarität einer der Stufen Impulsgenerator, Differenzverstärker, Spitzenwertdetektor sowie Spannungskomparator vertauscht wird.

[A2] In weiterer Ausgestaltung der Erfindung sind die invertierten und nichtinvertierten kurzen Pulse des impulsgenerators steilflankig.

[A3] In weiterer Ausgestaltung des erfindungsgemäßen Sensors weisen. die Elektroden eine der Behälterwand des Behälters zweckmäßig angepasste geometrische Form auf.

[A4] ]In weiterer Ausgestaltung des erfindungsgemäßen Sensors wird der Differenzverstärker nach Ablauf eines Messimpulses für die Zeit bis zum Beginn des nächsten Messimpulses ausgeschaltet.

[A5] In weiterer Ausgestaltung des erfindungsgemäßen Sensors wird auch der Spannungsabfall an dem zweiten Widerstand durch einen zweiten, mit dem Differenzverstärker hoher Gleichtaktunterdrückung identischen, jedoch mit den Eingängen umgekehrt angeschlossenen Differenzverstärker und ebenso nachgeschalteten, zum Spitzenwertdetektor identischen Spitzenwertdetektor ausgewertet und die Messspannungen beider Zweige werden über ein Summiemetzwerk aus zwei gleichen Widerständen dem gemeinsamen Ausgangskomparator zugeführt und auch beide Zweige durch den Prüfimpuls überwacht.

[A6] In weiterer Ausgestaltung des erfindungsgemäßen Sensors wird der an dem einen der beiden Widerstände auftretende Spannungsabfall um den festen Faktor der Größenordnung 5-50 verstärkt.

[A7] Bei einem Sensor zur berührungslosen Detektion des Füllstandes eines flüssigen und anhaftenden Mediums hoher Leitfähigkeit, insbesondere Blut, durch eine nichtmetallische Behälterwand eines Behälters mit mindestens einer Elektrode, wird die Aufgabe des Weiteren dadurch gelöst, dass durch einen Impulsgenerator, der kurzzeitige Impulse erzeugt, die über einen niederohmigen Widerstand, Messwiderstand, eine an der Behälterwand außen angebrachte Elektrode, Messelektrode, ansteuern sowie durch einen schnellen Differenzverstärker hoher Gleichtaktunterdrückung, welcher einen durch den füllstandsabhängigen Impulsstrom verursachten Spannungsabfall an dem Messwiderstand abgreift, diesen Spannungsabfall um einen festen Faktor verstärkt und einem nachgeschalteten Spitzenwertdetektor mit Siebung zur Gewinnung einer füllstandsabhängigen Gleichspannung sowie einem nachgeschalteten Spannungskomparator zuführt, welcher durch Vergleich der Ausgangsspannung des Spitzenwertdetektors mit einer einstellbaren Sollspannung ein Schaltsignal generiert, welches vom "Low-Zustand" zum "High-Zustand" wechselt, sobald durch einen steigenden Füllstand die Messelektrode hinreichend bedeckt ist und umgekehrt, wenn der Füllstand unter die Messelektrode sinkt oder invers auf die Änderung des Füllstandes reagiert, sobald die Polarität einer der Stufen Impulsgenerator, Differenzverstärker, Spitzenwertdetektor sowie Spannungskomparator vertauscht wird und wobei die Messelektrode mit einer rückwärtig angeordneten und mit dem Minus-Ausgang des Impulsgenerators verbundenen Schirmelektrode versehen ist und mit dieser Anordnung unsymmetrische Füllstandsmessungen gegen Erde durchführbar sind.

[A8] In einer weiteren Ausgestaltung kann eine Implementierung einer Selbstüberwachung der Funktion durch Einspeisung eines Prüfrechteckes niedriger Frequenz (10-200Hz) durch einen Rechteckgenerator über einen hochohmigen Widerstand an der einen Elektrode, Messelektrode, welches in seiner positiven Halbwelle den Messstrom durch den Messwiderstand erhöht, in seiner negativen Halbwelle den Messstrom durch den Messwiderstand erniedrigt und diese Messstromschwankungen sich am Ausgang des Spitzenwertdetektors der Messgleichspannung als "Ripple" rechteckförmig überlagern und einen dem Spitzenwertdetektor nachgeschalteten RC-Tiefpass mit niedriger Grenzfrequenz, welcher den überlagerten Anteil wieder ausfiltert und die reine Messspannung dem Ausgangskomparator zuführt und einen dem Spitzenwertdetektor ebenfalls nachgeschalteten RC-Tiefpass höherer Grenzfrequenz, welcher den Überlagerungsanteil einem Komparator zuführt, welcher durch Vergleich der gefilterten Messspannung mit dem Überlagerungsanteil das Prüfrechteck steilflankig regeneriert und über einen RC-Hochpass aus den Flanken positive und negative Nadelimpulse formt und diese der einstellbaren Sollspannung am Ausgangskomparator überlagert, so dass die jeweilige Polarität des füllstandsabhängigen Ausgangssignals in, durch die Prüffrequenz vorgegebenen Zeitabständen kurzzeitig wechselt und das Vorhandensein dieser Prüfimpulse als Vorraussetzung für einwandfreie Funktion aller Schaltungsbestandteile am Ausgang vom Anwender ausgewertet werden.

[A9] Bei einem Verfahren zur berührungslosen Detektion des Füllstandes eines flüssigen und anhaftenden Mediums hoher Leitfähigkeit, insbesondere Blut, durch eine nichtmetallische Behälterwand eines Behälters mit mindestens einer Elektrode, ist die Lösung der Aufgabe gekennzeichnet durch einen Impulsgenerator, welcher mit zueinander invertierten und nichtinvertierten exakt gegenphasig zueinander kurzen Pulsen über zwei gleichwertige niederohmige Widerstände zwei gleiche, nebeneinander und auf gleicher Höhe zum Füllstand des Mediums angeordnete und an der Behälterwand außen angebrachte Elektroden ansteuert sowie unter Verwendung eines schnellen Differenzverstärker hoher Gleichtaktunterdrückung, welcher einen durch den füllstandsabhängigen Impulsstrom verursachten Spannungsabfall an dem einen der beiden Widerstände, Messwiderstand, abgreift, diesen Spannungsabfall um einen festen Faktor verstärkt und einem nachgeschalteten Spitzenwertdetektor mit Siebung zur Gewinnung einer füllstandsabhängigen Gleichspannung sowie einem nachgeschalteten Spannungskomparator zuführt, welcher durch Vergleich der Ausgangsspannung des Spitzenwertdetektors mit einer einstellbaren Sollspannung ein Schaltsignal generiert, welches vom "Low-Zustand" zum "High-Zustand" wechselt, sobald durch einen steigenden Füllstand die Elektroden hinreichend bedeckt sind und umgekehrt, wenn der Füllstand unter die Elektroden sinkt oder invers auf die Änderung des Füllstandes reagiert, sobald die Polarität einer der Stufen Impulsgenerator, Differenzverstärker, Spitzenwertdetektor sowie Spannungskomparator vertauscht wird.

[A10] Bei einem zweiten Verfahren zur berührungslosen Detektion des Füllstandes eines flüssigen und anhaftenden Mediums hoher Leitfähigkeit, insbesondere Blut, durch eine nichtmetallische Behälterwand eines Behälters mit mindestens einer Elektrode, ist die Lösung der Aufgabe gekennzeichnet durch einen Impulsgenerator, welcher kurzzeitige Impulse erzeugt, die über einen niederohmigen Widerstand, Messwiderstand, eine an der Behälterwand außen angebrachte Elektrode, Messelektrode, ansteuern sowie durch einen schnellen Differenzverstärker hoher Gleichtaktunterdrückung welcher einen, durch den füllstandsabhängigen Impulsstrom verursachten Spannungsabfall an dem Messwiderstand, abgreift, diesen Spannungsabfall um einen festen Faktor verstärkt und einem nachgeschaltetem Spitzenwertdetektor mit Siebung zur Gewinnung einer füllstandsabhängigen Gleichspannung sowie einem nachgeschaltetem Spannungskomparator zuführt, welcher durch Vergleich der Ausgangsspannung des Spitzenwertdetektors mit einer einstellbaren Sollspannung ein Schaltsignal generiert, welches vom "Low-Zustand" zum "High-Zustand" wechselt, sobald durch einen steigenden Füllstand die Messelektrode hinreichend bedeckt ist und umgekehrt, wenn der Füllstand unter die Messelektrode sinkt oder invers auf die Änderung des Füllstandes reagiert, sobald die Polarität einer der Stufen Impulsgenerator, Differenzverstärker, Spitzenwertdetektor sowie Spannungskomparator vertauscht wird und wobei die Messelektrode mit einer rückwärtig angeordneten und mit dem Minus-Ausgang des lmpulsgenerators verbundenen Schirmelektrode versehen ist und mit dieser Anordnung unsymmetrische Füllstandsmessungen gegen Erde durchführbar sind.

[A11] Bei einem Verfahren Kann durch eine Implementierung einer Selbstüberwachung der Funktion durch Einspeisung eines Prüfrechteckes niedriger Frequenz (10-200Hz) durch einen Rechteckgenerator über einen hochohmigen Widerstand an der einen Elektrode, Messelektrode, welches Prüfrechteck in seiner positiven Halbwelle den Messstrom durch den Messwiderstand erhöht, in seiner negativen Halbwelle den Messstrom durch den Messwiderstand erniedrigt und diese Messstromschwankungen sich am Ausgang des Spitzenwertdetektors der Messgleichspannung als "Ripple" rechteckförmig überlagern und einen dem Spitzenwertdetektor nachgeschalteten RC-Tiefpass mit niedriger Grenzfrequenz, welcher den überlagerten Anteil wieder ausfiltert und die reine Messspannung dem Ausgangskomparator zuführt und einen dem Spitzenwertdetektor ebenfalls nachgeschalteten RC-Tiefpass höherer Grenzfrequenz, welcher den Überlagerungsanteil einem Komparator zuführt, welcher durch Vergleich der gefilterten Messspannung mit dem Überlagerungsanteil das Prüfrechteck steilflankig regeneriert und über einen RC-Hochpass aus den Flanken positive und negative Nadelimpulse formt und diese der einstellbaren Sollspannung am Ausgangskomparator überlagert, so dass die jeweilige Polarität des füllstandsabhängigen Ausgangssignals in, durch die Prüffrequenz vorgegebenen Zeitabständen kurzzeitig wechselt und das Vorhandensein dieser Prüfimpulse als Vorraussetzung für einwandfreie Funktion aller Schaltungsbestandteile am Ausgang vom Anwender ausgewertet werden.

### Kurzbeschreibung der Zeichnung, in der zeigen:

- Figur 1: die Anwendung eines kapazitiven Sensors des Standes der Technik bei einem Medien ohne Leitfähigkeit und ohne Dipolcharakter der Molekühlstruktur, wie Öl, Kunststoffgranulat oder Feststoffe durch Erhöhung der Gesamtdielektrizitätszahl εᵣ von Behälterwand + εᵣ Medium
- Figur 2: die Anwendung eines kapazitiven Sensors des Standes der Technik bei leitfähigen Medien, wobei hier die Kapazität zwischen aktiver Sensorfläche und dem leitfähigem Medium auf der Gegenseite detektiert wird
- Figur 3: die zeichnerische Darstellung des eine Messung nach dem Stand der Technik verfälschenden Grundproblems, wenn das leitfähige Medium ohne Oberflächenspannung zur Bildung von dünnen Filmen, Schäumen oder gar dickeren Anhaftungen an der Behälterinnenseite neigt
- Figuren 3 a + b: zwei Ersatzschaltbilder der Figur 3 zur Darstellung der Koppelkapazität zwischen aktiver Fläche und dem Medium oder der Anhaftung durch eine Reihenschaltung von idealem Plattenkondensator mit dem Widerstand des Anhaftungsfilms bzw. eine Reihenschaltung von Blindwiderstand mit dem Widerstand des Anhaftungsfilms
- Figur 4a: ein beispielhaftes Schaltbild eines erfindungsgemäßen Sensors mit Messelektrode und Gegenelektrode
- Figur 4b: die Mess- und die Gegenelektrode mit dazwischen einem Medium

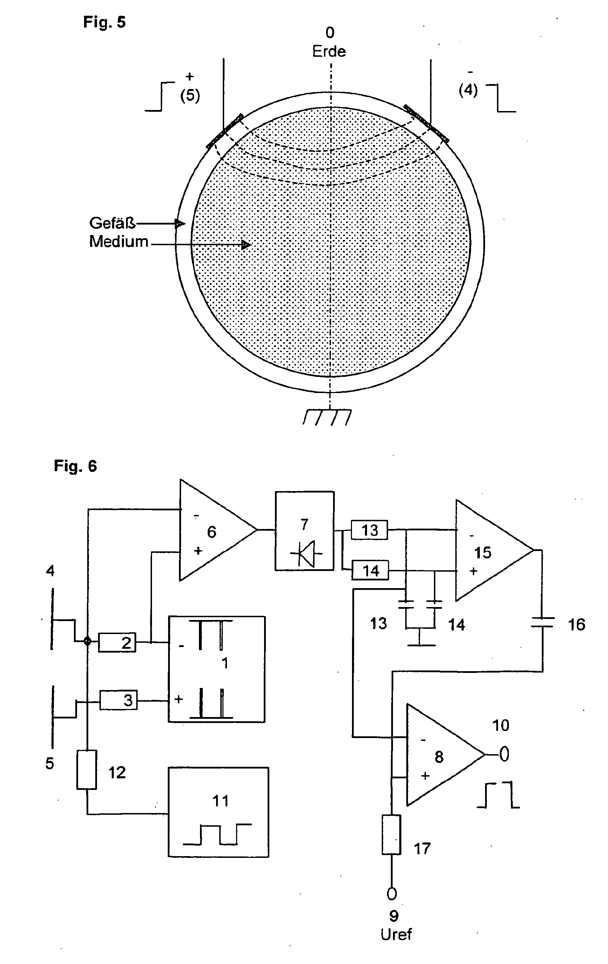

- Figur 5: eine Draufsicht auf einen Behälter mit einem darin befindlichen Medium sowie an der Behälterwand angeordneten Elektroden und den Feldlinienverlauf zwischen denselben
- Figur 6: ein beispielhaftes Schaltbild des erfindungsgemäßen Sensors mit Selbstüberwachung

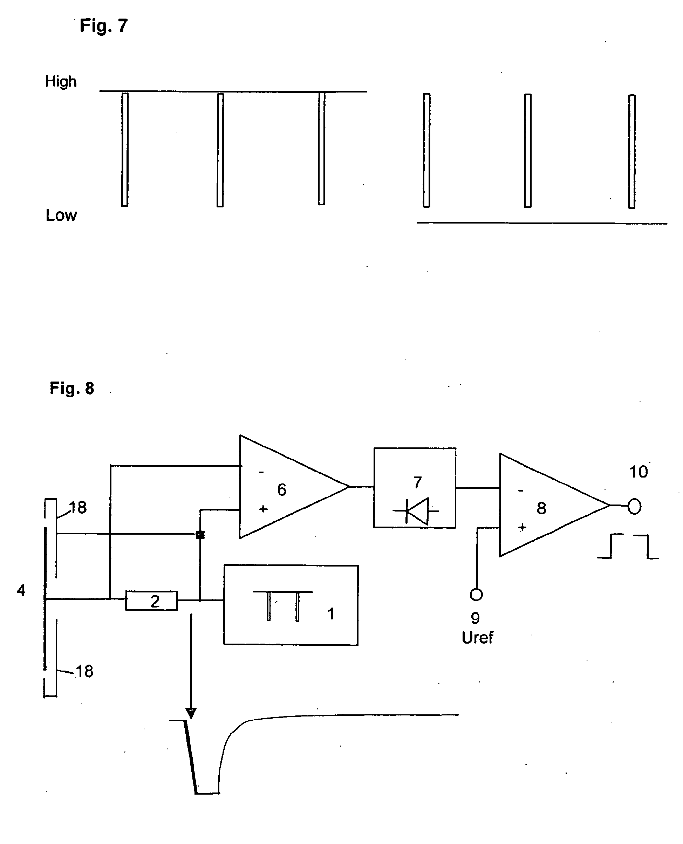

- Figur 7: eine Darstellung der Ausgangsspannung am Ausgangskomparator gemäß der Figur 6 und
- Figur 8: ein beispielhaftes Schaltbild eines weiteren erfindungsgemäßen Sensors, welcher gegenüber dem Sensor der Figur 4 vereinfacht aufgebaut ist mit jedoch nur einer Messelektrode mit einem Widerstand, wobei diese Ausführungsform die allgemeinere Schaltung wiedergibt.

### Wege zur Ausführung der Erfindung und beste Ausführungsform:

Die folgend beschriebene erfindungsgemäße Anordnung gemäß der Figur 4 vermeidet somit die oben genannten Nachteile der bisherigen Technik und ermöglicht zudem die Abfrage von Medien mit noch höheren Leitwerten.

Ein Pulsgenerator 1 erzeugt Rechteckimpulse mit geringer Pulsdauer und hoher Flankensteilheit direkt und invertiert exakt gegenphasig. Der invertierte Impuls speist über einen Messwiderstand 2, welcher einer von zwei Widerständen 2 und 3 ist, eine Messelektrode 4, welche eine von zwei Elektroden 4 und Gegenelektrode 5 ist, während der nicht invertierte Puls die Gegenelektrode 5 über den Widerstand 3 desselben Wertes wie der Widerstand 2 speist. Die Elektroden 4 und 5 sind zueinander symmetrisch angeordnet. Bei Vorhandensein einer Messkapazität 11, verursacht durch den Füllstand eines Mediums zwischen den Elektroden 4 und 5 oder zwischen der Elektrode 4 und Erde ergibt sich ein hoher und kurzer Stromladepuls durch die Messkapazität 11 und die Widerstände 2, 3. Der resultierende Spannungsabfall am Widerstand 2 wird durch einen schnellen Differenzverstärker 6 mit hoher Gleichtaktunterdrückung verstärkt und der Spitzenwert durch den Detektor 7 als gesiebte Gleichspannung einem Spannungskomparator 8 zugeführt. Der Spannungskomparator 8 vergleicht die Spitzenspannung mit einer, z.B. über Potentiometer, einstellbaren Referenzspannung 9 als Schwelle und gibt bei Überschreiten oder Unterschreiten dieser Schwelle bzw. des Füllstandes in Bezug auf die Elektroden 4, 5 an seinem Ausgang 10 ein Schaltsignal ab. Mit der einstellbaren Referenzspannung 9 wird die Empfindlichkeit des Sensors eingestellt.

### Mit dem Gegenstand der Erfindung ergeben sich folgende Vorteile:

Die Messung des Sensors erfolgt nur während der abfallenden Flanke des invertierten bzw. der ansteigenden Flanke des nichtinvertierten Pulses. Dies ist in Figur 4 durch den dick gezeichneten Teil des Signalverlaufs am Pulsgenerator dargestellt. Die Flankensteilheit muss in diesem Bereich sehr hoch sein, nämlich wenige ns/10V. Dadurch ergibt sich auch durch sehr kleine Messkapazitäten ein hoher kurzer Stromimpuls. Die steile Flanke beinhaltet nämlich Hochfrequenzanteile bis in den Bereich von 100Mhz, wodurch der Blindwiderstand der Koppelkapazität zum Medium stark minimiert wird. Durch das kleine Tastverhältnis bzw. eine niedrige Wiederholfrequenz im Bereich 10 KHz bis max. 500 KHz der schmalen Pulse (10 bis 100ns Pulsdauer) ist aber die ausgesendete spektrale Energie insgesamt sehr gering, obwohl die sensorische Wirkung der Anordnung so gut ist, als wenn sie mit einer sehr hohen Arbeitsfrequenz mit periodischer Funktion laufen würde. Durch den minimierten Blindwiderstand der Kopplung zum Medium während der Messung ist es fast so, als wäre die Messelektrode direkt in das Medium getaucht. Eine reine Kapazität zwischen den Elektroden bringt maximale Pulsströme, während eine Reihenschaltung eines Widerstandes mit der Messkapazität zu einer starken Verringerung des Pulsstromes führt. Die Messanordnung kann somit auch höhere Leitwerte eines Anhaftungsfilms oder von Schäumen vom höchsten Leitwert des Kompaktmediums selbst berührungslos unterscheiden.

Eine RC-Reihenschaltung, die der Anhaftungsfilm elektrisch gesehen darstellt, Figur 3, führt zu einer starken Verringerung des Pulsstromes und somit zu einer Verringerung des Spannungsabfalls am Widerstand 2, wodurch die erfindungsgemäße Anordnung in der Lage ist, große Spannungsunterschiede zwischen dem echten Füllstand oder nur einer Anhaftung zu liefern. Voraussetzung hierfür sind kleine Werte der Widerstände 2 und 3 im Bereich von 2 KOhm bis wenigen 100 Ohm.

Ein weiterer Vorteil des erfindungsgemäßen Gegenstandes und des Verfahrens gegenüber dem Stand der Technik ergibt sich durch die Einspeisung eines exakt gegenphasigen Impulses an der Elektrode 5. Durch das hohe Gegenpotential an der Elektrode 5 streben die elektrischen Feldlinien nicht mehr wie beim Stand der Technik durch das Medium über die Erdkapazität gegen Erde sondern durch das Medium zur Gegenelektrode Figur 5. Genau in der Mitte zwischen den Elektroden ergibt sich bei elektrisch und geometrisch symmetrischen Verhältnissen ein virtuelles 0-Potetial das mit dem Erdpotential identisch ist! Hierdurch ist oben beschriebene Problematik der Berührungsempfindlichkeit oder der Gefäßpositionierung im Raum völlig eliminiert. Die Erdkapazität spielt keinerlei Rolle mehr. Man erhält unabhängig von der Flüssigkeitsmenge und dem Standpunkt des Gefäßes im Raum immer gleiche, reproduzierbare Messergebnisse. Der

Messstrom fließt nicht mehr von einer Elektrode gegen Erde sondern nur noch zwischen den beiden Elektroden. Der "Stromkreislauf" ist somit über die beiden Elektroden bzw. innerhalb des erfindungsgemäßen Sensors geschlossen. Es besteht deshalb auch keinerlei Rückfluss des Messstroms über die Zuleitung Versorgungsspannung, Schaltsignal i.d.R. 3 Adern, des erfindungsgemäßen Sensors gegen Erde oder Masse. Somit werden hierdurch auch o.g. Störaussendungen die durch die niedrige Wiederholfrequenz ohnehin stark reduziert sind und Fehlfunktionen ganz ausgeschlossen.

Ein weiterer Vorteil des erfindungsgemäßen Sensors und des Verfahrens gegenüber den meisten oszillatorischen Verfahren nach Stand der Technik ergibt sich in einer vielfach höheren Störfestigkeit gegen elektrische Störwechselfelder. Die Messverfahren nach Stand der Technik arbeiten meist mit einer periodischen Funktion kleinerer Energie und messen permanent. Der erfindungsgemäße Sensor misst nur während der kurzen Impulsdauer bzw. innerhalb eines kurzen Zeitfensters mit einer höheren Energie bzw. Spannung 10V Impulshöhe oder mehr. Hierdurch ergeben sich 2 Fakten bezüglich der Störfestigkeit: Durch die höhere Energie ergibt sich ein hohes Nutzsignal. Ein Störsignal, das sich dem Messstrom überlagert, muss erst in dessen Größenordnung kommen, bevor es einen Einfluss auf das Messergebnis ausübt.

Ferner wird der Messverstärker 6 außerhalb des kurzen Zeitfensters für den Großteil der Zeit "totgeschaltet", so dass Störfelder in diesem Zeitraum keinen Einfluss ausüben. Der letzt gemessene Wert bleibt in der Siebung des Detektors 7 solange bis zur nächsten Impulsflanke zwischengespeichert.

In Bereich medizinischer Funktionen, wie der Füllstandsüberwachung von Blut in Herz-Lungen-Maschinen, von der das Leben eines Menschen abhängt, gelten hohe Anforderungen an die Funktionssicherheit der Technik bis hin zu einer permanenten Selbstüberwachung der eigenen Funktion. Bei dem erfindungsgemäßen Sensor gemäß der Figur 4 ist es technisch einfach möglich eine Selbstüberwachung der einwandfreien Sensorfunktion zu implementieren, Figur 6.

Ein Rechteckgenerator 11 speist über einen hochohmigen Widerstand 12 eine Rechteckfunktion bzw. einen Prüfimpuls niedriger Frequenz an der Messelektrode 4 ein. In der positiven Halbwelle des Rechteckgenerators 11 wird der kapazitive Messstrom durch den Widerstand 2 geringfügig erhöht. Die Prüfrechteckfunktion erscheint hinter dem Detektor 7 somit als Hüllkurve, die sich mit geringer Amplitude der gleichgerichteten Messspannung überlagert. Die Messspannung durchläuft zwei RC-Tiefpässe, einer mit einer kleinen Zeitkonstante 14 und einer mit einer großen Zeitkonstante 13. Durch den RC-Tiefpass 13 wird die Prüfrechteckspannung weggesiebt und die reine Messgleichspannung dem Ausgangskomparator 8 zugeführt. Hinter dem RC-Tiefpass 14 ist die Prüffunktion hingegen noch vorhanden und wird dem Komparator 15 zugeführt. Durch seine hohe Leerlaufverstärkung regeneriert er die Prüfrechteckfunktion. Die Flanken des Prüfrechteckes werden durch den RC-Hochpass 16, 17 zu positiven und negativen Nadelimpulsen differenziert, welche sich der Referenzspannung Uref 9 überlagern. Der Ausgangskomparator 8 kippt somit je nach Betätigungszustand entweder nur bei den negativen oder nur bei den positiven Nadelimpulsen kurzzeitig aus dem Low-Zustand in den High-Zustand oder umgekehrt. Der Ausgangskomparator 8 liefert das Schaltsignal High, wenn ein Füllstand den Bereich der Elektroden 4, 5 erreicht und geht in den Low-Zustand, wenn der Füllstand unter 4 und 5 liegt. Diese Ausgangsspannung ist dann je nach Frequenz des Rechteckgenerators in regelmäßigen Abständen mit einem kurzen Prüfimpuls überlagert bzw. der jeweilige Schaltzustand wechselt für einen kurzen Moment gemäß der Figur 7.

Der Prüfimpuls durchläuft alle Stufen des erfindungsgemäßen Sensors bis zum Ausgang. Somit werden seine Bauteile bzw. seine Funktion zu fast 100% überwacht. Sobald die Impulse auf dem Ausgang verschwinden, liegt ein Defekt vor und ein Alarm kann ausgelöst werden. Das Vorhandensein der Impulse kann hierzu vom Anwender z.B. durch kapazitive Auskopplung und Gleichrichtung sowie andere Auswerteschaltungen geprüft werden. Vom Sensor betätigte Schaltelemente, wie z.B. ein Relais, werden durch die impulse nicht gestört, weil der Signalwechsel zu kurz ist. Die Prüfwiederholfrequenz kann im Bereich von ca.10 bis 200Hz liegen.

Figur 8 zeigt ein beispielhaftes Schaltbild eines weiteren erfindungsgemäßen Sensors, welcher gegenüber dem Sensor der Figur 4 vereinfacht aufgebaut ist mit jedoch nur einer Messelektrode mit einem Widerstand, wobei diese Ausführungsform die allgemeinere Schaltung wiedergibt.

### Gewerbliche Anwendbarkeit:

Die Erfindung ist insbesondere zur Messung von Füllständen flüssiger und anhaftender Medien hoher Leitfähigkeit, insbesondere Blut, gewerblich anwendbar. Sie stellt eine Vorrichtung und ein Verfahren zur berührungslosen Detektion derartiger Füllstände durch nichtmetallische Behälterwände eines Behälters unter erhöhten EMV-Anforderungen und mit Selbstüberwachung zur Verfügung.

## Patentansprüche

1. Sensor zur berührungslosen Detektion des Füllstandes eines flüssigen und anhaftenden Mediums hoher Leitfähigkeit, insbesondere Blut, durch eine nichtmetallische Behälterwand eines Behälters mit mindestens einer Elektrode, **gekennzeichnet durch** einen Impulsgenerator (1), welcher mit zueinander invertierten und nichtinvertierten exakt gegenphasig zueinander kurzen Pulsen über zwei gleichwertige niederohmige Widerstände (2, 3) zwei gleiche, nebeneinander und auf gleicher Höhe zum Füllstand des Mediums angeordnete und an der Behälterwand außen angebrachte Elektroden (4, 5) ansteuert sowie **durch** einen schnellen Differenzverstärker hoher Gleichtaktunterdrückung (6), welcher einen **durch** den füllstandsabhängigen Impulsstrom verursachten Spannungsabfall an dem einen der beiden Widerstände (2, 3), Messwiderstand (2), abgreift, diesen Spannungsabfall um einen festen Faktor verstärkt und einem nachgeschalteten Spitzenwertdetektor (7) mit Siebung zur Gewinnung einer füllstandsabhängigen Gleichspannung sowie einem nachgeschalteten Spannungskomparator (8) zuführt, welcher **durch** Vergleich der Ausgangsspannung des Spitzenwertdetektors (7) mit einer einstellbaren Sollspannung (9) ein Schaltsignal generiert, welches vom "Low-Zustand" zum "High-Zustand" wechselt, sobald **durch** einen steigenden Füllstand die Elektroden (4, 5) hinreichend bedeckt sind und umgekehrt, wenn der Füllstand unter die Elektroden (4, 5) sinkt oder invers auf die Änderung des Füllstandes reagiert, sobald die Polarität einer der Stufen Impulsgenerator (1), Differenzverstärker (6), Spitzenwertdetektor (7) sowie Spannungskomparator (8) vertauscht wird.

2. Sensor nach Anspruch 1, **dadurch gekennzeichnet,**
**dass** die invertierten und nichtinvertierten kurzen Pulse des Impulsgenerators steilflankig sind.

3. Sensor nach Anspruch 1 oder 2, **dadurch gekennzeichnet,**
**dass** die Elektroden (4, 5) eine der Behälterwand des Behälters zweckmäßig angepasste geometrische Form aufweisen.

4. Sensor nach einem der vorigen Ansprüche, **dadurch gekennzeichnet,**
**dass** der Differenzverstärker (6) nach Ablauf eines Messimpulses für die Zeit bis zum Beginn des nächsten Messimpulses ausgeschaltet wird.

5. Sensor nach einem der vorigen Ansprüche, **dadurch gekennzeichnet,**
**dass** auch der Spannungsabfall an dem zweiten Widerstand (3) durch einen zweiten, mit dem Differenzverstärker hoher Gleichtaktunterdrückung (6) identischen, jedoch mit den Eingängen umgekehrt angeschlossenen Differenzverstärker (6a) und ebenso nachgeschaltetem zum Spitzenwertdetektor (7) identischen Spitzenwertdetektor (7b) ausgewertet wird und die Messspannungen beider Zweige über ein Summiernetzwerk aus zwei gleichen Widerständen dem gemeinsamen Ausgangskomparator (8) zugeführt werden und auch beide Zweige durch den Prüfimpuls überwacht werden.

6. Sensor nach Anspruch 1, **dadurch gekennzeichnet,**
**dass** der an dem einen der beiden Widerstände (2) auftretende Spannungsabfall um den festen Faktor der Größenordnung 5-50 verstärkt wird.

7. Sensor zur berührungslosen Detektion des Füllstandes eines flüssigen und anhaftenden Mediums hoher Leitfähigkeit, insbesondere Blut, durch eine nichtmetallische Behälterwand eines Behälters mit mindestens einer Elektrode, **gekennzeichnet durch** einen Impulsgenerator (1), der kurzzeitige Impulse erzeugt, die über einen niederohmigen Widerstand (2), Messwiderstand, eine an der Behälterwand außen angebrachte Elektrode (4), Messelektrode, ansteuern sowie durch einen schnellen Differenzverstärker hoher Gleichtaktunterdrückung (6), welcher einen **durch** den füllstandsabhängigen Impulsstrom verursachten Spannungsabfall an dem Messwiderstand (2) abgreift, diesen Spannungsabfall um einen festen Faktor verstärkt und einem nachgeschalteten Spitzenwertdetektor (7) mit Siebung zur Gewinnung einer füllstandsabhängigen Gleichspannung sowie einem nachgeschalteten Spannungskomparator (8) zuführt, welcher **durch** Vergleich der Ausgangsspannung des Spitzenwertdetektors (7)
mit einer einstellbaren Sollspannung (9) ein Schaltsignal generiert, welches vom "Low-Zustand" zum "High-Zustand" wechselt, sobald **durch** einen steigenden Füllstand die Messelektrode (4) hinreichend
bedeckt ist und umgekehrt, wenn der Füllstand unter die Messelektrode (4) sinkt oder invers auf die Änderung des Füllstandes reagiert, sobald die Polarität einer der Stufen Impulsgenerator (1), Differenzverstärker (6), Spitzenwertdetektor (7) sowie Spannungskomparator (8) vertauscht wird und wobei die Messelektrode (4) mit einer rückwärtig angeordneten und mit dem Minus-Ausgang des Impulsgenerators (1) verbundenen Schirmelektrode (18) versehen ist und mit dieser Anordnung unsymmetrische Füllstandsmessungen gegen Erde durchführbar sind.

8. Sensor nach einem der vorigen Ansprüche 1 bis 7,
**gekennzeichnet durch** eine Implementierung einer Selbstüberwachung der Funktion **durch** Einspeisung eines Prüfrechteckes niedriger Frequenz (10-200Hz) durch einen Rechteckgenerator (11) über einen hochohmigen Widerstand (12) an der einen Elektrode (4), Messelektrode (4), welches in seiner positiven Halbwelle den Messstrom **durch** den Messwiderstand (2) erhöht, in seiner negativen Halbwelle den Messstrom **durch** den Messwiderstand (2) erniedrigt und diese Messstromschwankungen sich am Ausgang des Spitzenwertdetektors (7) der Messgleichspannung als "Ripple" rechteckförmig überlagern und einen dem Spitzenwertdetektor (7) nachgeschalteten RC-Tiefpass (13) mit niedriger Grenzfrequenz, welcher den überlagerten Anteil wieder ausfiltert und die reine Messspannung dem Ausgangskomparator (8) zuführt und einen dem Spitzenwertdetektor (7) ebenfalls nachgeschalteten RC-Tiefpass (14) höherer Grenzfrequenz, welcher den Überlagerungsanteil einem Komparator (15) zuführt, welcher **durch** Vergleich der gefilterten Messspannung mit dem Überlagerungsanteil das Prüfrechteck steilflankig regeneriert und über einen RC-Hochpass (16) (17) aus den Flanken positive und negative Nadelimpulse formt und diese der einstellbaren Sollspannung (9) am Ausgangskomparator (8) überlagert, so dass die jeweilige Polarität des füllstandsabhängigen Ausgangssignals (10) in, **durch** die Prüffrequenz vorgegebenen Zeitabständen kurzzeitig wechselt und das Vorhandensein dieser Prüfimpulse als Vorraussetzung für einwandfreie Funktion aller Schaltungsbestandteile am Ausgang vom Anwender ausgewertet werden kann.

9. Verfahren zur berührungslosen Detektion des Füllstandes eines flüssigen und anhaftenden Mediums hoher Leitfähigkeit, insbesondere Blut, durch eine nichtmetallische Behälterwand eines Behälters mit mindestens einer Elektrode,
**gekennzeichnet durch** einen Impulsgenerator (1), welcher mit zueinander invertierten und nichtinvertierten exakt gegenphasig zueinander kurzen Pulsen über zwei gleichwertige niederohmige Widerstände (2, 3) zwei gleiche, nebeneinander und auf gleicher Höhe zum Füllstand des Mediums angeordnete und an der Behälterwand außen angebrachte Elektroden (4, 5) ansteuert sowie unter Verwendung eines schnellen Differenzverstärker hoher Gleichtaktunterdrückung (6), welcher einen durch den füllstandsabhängigen Impulsstrom verursachten Spannungsabfall an dem einen der beiden Widerstände (2, 3), Messwiderstand (2), abgreift, diesen Spannungsabfall um einen festen Faktor verstärkt und einem nachgeschalteten Spitzenwertdetektor (7) mit Siebung zur Gewinnung einer füllstandsabhängigen Gleichspannung sowie einem nachgeschalteten Spannungskomparator (8) zuführt, welcher **durch** Vergleich der Ausgangsspannung des Spitzenwertdetektors (7) mit einer einstellbaren Sollspannung (9) ein Schaltsignal generiert, welches vom "Low-Zustand" zum "High-Zustand" wechselt, sobald **durch** einen steigenden Füllstand die Elektroden (4, 5) hinreichend bedeckt sind und umgekehrt, wenn der Füllstand unter die Elektroden (4, 5) sinkt oder invers auf die Änderung des Füllstandes reagiert, sobald die Polarität einer der Stufen Impulsgenerator (1), Differenzverstärker (6), Spitzenwertdetektor (7) sowie Spannungskomparator (8) vertauscht wird.

10. Verfahren zur berührungslosen Detektion des Füllstandes eines flüssigen und anhaftenden Mediums hoher Leitfähigkeit, insbesondere Blut, durch eine nichtmetallische Behälterwand eines Behälters mit mindestens einer Elektrode, **gekennzeichnet durch** einen Impulsgenerator (1), welcher kurzzeitige Impulse erzeugt, die über einen niederohmigen Widerstand (2), Messwiderstand, eine an der Behälterwand außen angebrachte Elektrode (4), Messelektrode, ansteuern sowie durch einen schnellen Differenzverstärker hoher Gleichtaktunterdrückung (6) welcher einen, **durch** den füllstandsabhängigen Impulsstrom verursachten Spannungsabfall an dem Messwiderstand (2), abgreift, diesen Spannungsabfall um einen festen Faktor verstärkt und einem nachgeschaltetem Spitzenwertdetektor (7) mit Siebung zur Gewinnung einer füllstandsabhängigen Gleichspannung sowie einem nachgeschaltetem Spannungskomparator (8) zuführt, welcher **durch** Vergleich der Ausgangsspannung des Spitzenwertdetektors (7) mit einer einstellbaren Sollspannung (9) ein Schaltsignal generiert, welches vom "Low-Zustand" zum "High-Zustand" wechselt, sobald **durch** einen steigenden Füllstand die Messelektrode (4) hinreichend bedeckt ist und umgekehrt, wenn der Füllstand unter die Messelektrode (4) sinkt oder invers auf die Änderung des Füllstandes reagiert, sobald die Polarität einer der Stufen Impulsgenerator (1), Differenzverstärker (6), Spitzenwertdetektor (7) sowie Spannungskomparator (8) vertauscht wird und wobei die Messelektrode (4) mit einer rückwärtig angeordneten und mit dem Minus-Ausgang des Impulsgenerators (1) verbundenen Schirmelektrode (18) versehen ist und mit dieser Anordnung unsymmetrische Füllstandsmessungen gegen Erde durchführbar sind.

11. Verfahren nach Anspruch 9 oder 10, **gekennzeichnet durch** eine Implementierung einer Selbstüberwachung der Funktion **durch** Einspeisung eines Prüfrechteckes niedriger Frequenz (10-200Hz) **durch** einen Rechteckgenerator (11) über einen hochohmigen Widerstand (12) an der einen Elektrode (4), Messelektrode (4), welches Prüfrechteck in seiner positiven Halbwelle den Messstrom **durch** den Messwiderstand (2) erhöht, in seiner negativen Halbwelle den Messstrom **durch** den Messwiderstand (2)
erniedrigt und diese Messstromschwankungen sich am Ausgang des Spitzenwertdetektors (7) der Messgleichspannung als "Ripple" rechteckförmig überlagern und einen dem Spitzenwertdetektor (7) nachgeschalteten RC-Tiefpass (13) mit niedriger Grenzfrequenz, welcher den überlagerten Anteil wieder ausfiltert und die reine Messspannung dem Ausgangskomparator (8) zuführt und einen dem Spitzenwertdetektor (7) ebenfalls nachgeschalteten RC-Tiefpass (14) höherer Grenzfrequenz, welcher den Überlagerungsanteil einem Komparator (15) zuführt, welcher durch Vergleich der gefilterten Messspannung mit dem Überlagerungsanteil das Prüfrechteck steilflankig regeneriert und über einen RC-Hochpass (16) (17) aus den Flanken positive und negative Nadelimpulse formt und diese der einstellbaren Sollspannung (9) am Ausgangskomparator (8) überlagert, so dass die jeweilige Polarität des füllstandsabhängigen Ausgangssignals (10) in, **durch** die Prüffrequenz vorgegebenen Zeitabständen kurzzeitig wechselt und das Vorhandensein dieser Prüfimpulse als Vorraussetzung für einwandfreie Funktion aller Schaltungsbestandteile am Ausgang vom Anwender ausgewertet werden kann.

## Claims

1. A Sensor for the contactless detection of a level of an adhering liquid medium of high conductivity, especially blood, through a non-metal container wall of a container having at least one electrode, **characterized by**
a pulse generator (1) which applies, via two equivalent low-value resistors (2, 3), mutually inverted and non-inverted pulses to two identical electrodes (4, 5) disposed side by side and at the same height with respect to a level of said medium and mounted on the exterior of said container wall, and by a high-speed differential amplifier of high common-mode rejection (6) which picks off a voltage drop caused by the level-dependent pulse current on one of said two resistors (2, 3), a measuring resistor (2), amplifies said voltage drop by a fixed factor, and supplies it to a downstream filtered peak detector (7) for obtaining a level-dependent DC voltage, and to a downstream voltage comparator (8) for comparing the output voltage of said peak detector (7) to an adjustable nominal voltage (9) in order to generate a switch signal which immediately switches from "low" to "high" when said electrodes (4, 5) become sufficiently covered by a rising level, and switches in the other direction when said level falls below said electrodes (4, 5), or responds inversely to a change in said level if the polarity of any one of a pulse generator (1) stage, a differential amplifier (6) stage, a peak detector (7) stage or a voltage comparator (8) stage is reversed.

2. A Sensor according to claim 1, **characterized by**
said inverted and non-inverted pules of said pulse generator having steep edges and being exactly antiphase with respect to each other.

3. A Sensor according to one of claims 1 or 2, **characterized by**
said electrodes (4, 5) having a geometrical shape which conveniently matches said container wall of said container.

4. A Sensor according to any of the preceding claims, **characterized by** said differential amplifier (6) being deactivated from an end of a test pulse to a start of a next test pulse.

5. A Sensor according to any of the preceding claims, **characterized by**
assessing also a voltage drop at said second resistor (3) by the use of a second differential amplifier (6a) which is identical to said differential amplifier of high common-mode rejection (6), but which has inversely connected inputs, and a downward peak detector (7b) which is identical to said peak detector (7), and supplying the measuring voltages of both branches via a summation network comprised of two identical resistors to a shared output comparator (8), and monitoring both branches using said test pulse.

6. A Sensor according to claim 1, **characterized by** amplifying said voltage drop appearing at one of said two resistors (2) by a fixed factor in an order of 5 to 50.

7. A Sensor for the contactless detection of an adhering liquid medium of high conductivity, especially blood, through a non-metal container wall of a container having at least one electrode, **characterized by**
a pulse generator (1) generating short-period pulses which are applied to an electrode (4), a measuring electrode, mounted on the exterior of a container wall, via a low-value resistor (2), and by a high-speed differential amplifier of high common-mode rejection (6) picking off a voltage drop caused by the level-dependent pulsed current on said measuring resistor (2), amplifying said voltage drop by a fixed factor, and supplying the same to a downstream filtered peak detector (7) for obtaining a level-dependent DC voltage and to a downstream voltage comparator (8) for comparing the output voltage of said peak detector (7) to an adjustable nominal voltage (9) in order to generate a switch signal which immediately switches from "low" to "high" when said measuring electrode (4) becomes sufficiently covered by a rising level, and switches in the other direction when said level falls below said measuring electrode (4), or responds inversely to a change in said level if the polarity of any one of a pulse generator (1) stage, a differential amplifier (6) stage, a peak detector (7) stage or a voltage comparator (8) stage is reversed, which assembly is capable of performing asymmetrical level measurements to earth.

8. A Sensor according to any of the preceding claims 1 to 7, **characterized by**
an implementation of functional self-monitoring [Fig. 6] by feeding a low-frequency (10 to 200 Hz) test rectangle from a rectangle generator (11) via a high-value resistor (12) at said one electrode (4), a measuring electrode (4), which increases, by said measuring resistor (2), the measuring current in its positive half-wave, and decreases, by said measuring resistor (2), the measuring current in its negative half-wave, said fluctuating measuring currents being superimposed at the output of said peak detector (7) as a "ripple" of rectangular shape, and an RC low pass (13) of low limiting frequency downstream of said peak detector (7), which filters out said superimposed portion and supplies the pure measuring voltage to said output comparator (8), and an RC low pass (14) of higher limiting voltage, which is also disposed downstream of said peak detector (7), and which supplies said superimposed portion to a comparator (15) which regenerates said steep-edge test rectangle by comparing said filtered measuring voltage and said superimposed portion, and forms positive and negative needle pulses from said edges via an RC high pass (16) (17) and superimposes them over the adjustable nominal voltage (9) at said output comparator (8), so that the polarity of each level-dependent output signal (10) is reversed in short intervals on the basis of a test frequency, and a user will be able to assess the presence of said test pulses at the output as a prerequisite for a proper functioning of all circuit components.

9. A process for contactless detecting a level of a liquid adhering medium of high conductivity, especially blood, through a non-metal container wall of a container having at least one electrode, **characterized by**
a pulse generator (1) applying, via two equivalent low-value resistors (2, 3), mutually inverted and non-inverted pulses to two identical electrodes (4, 5) disposed side by side and at the same height with respect to a level of said medium and mounted on the exterior of said container wall, and amplifying a voltage drop by a fixed factor by the use of a high-speed differential amplifier of high common-mode rejection (6), which picks off said voltage drop caused by the level-dependent pulse current at said one of both resistors (2, 3), a measuring resistor (2), and supplying it to a downstream peak detector (7) including filtering for obtaining a level-dependent DC voltage, and to a downstream voltage comparator (8) for comparing the output voltage of said peak detector (7) to an adjustable nominal voltage (9) in order to generate a switch signal which immediately switches from "low" to "high" when said electrodes (4, 5) are sufficiently covered by a rising level, and switches in the other direction when said level falls below said electrodes (4, 5), or responds inversely to a change in said level if the polarity of any one of a pulse generator (1) stage, a differential amplifier (6) stage, a peak detector (7) stage or a voltage comparator (8) stage is reversed.

10. A process for contactless detecting a level of a liquid adhering medium of high conductivity, especially blood, through a non-metal container wall of a container having at least one electrode, **characterized by**
a pulse generator (1) generating short-period pulses which are applied to an electrode (4), a measuring electrode, mounted on the exterior of a container wall, via a low-value resistor (2), and by a high-speed differential amplifier of high common-mode rejection (6) picking off a voltage drop caused by the level-dependent pulse current at said measuring resistor (2), amplifying said voltage drop by a fixed factor, and supplying the same to a downstream peak detector (7) including filtering for obtaining a level-dependent DC voltage and to a downstream voltage comparator (8) for comparing the output voltage of said peak detector (7) to an adjustable nominal voltage (9) in order to generate a switch signal which immediately switches from "low" to "high" when said measuring electrode (4) becomes sufficiently covered by a rising level, and switches in the other direction when said level falls below said measuring electrode (4), or responds inversely to a change in said level if the polarity of any one of a pulse generator (1) stage, a differential amplifier (6) stage, a peak detector (7) stage or a voltage comparator (8) stage is reversed, which assembly is capable of performing asymmetrical level measurements to earth.

11. A process according to claim 9 or 10, **characterized by** an implementation of functional self-monitoring by feeding a low-frequency (10 to 200 Hz) test rectangle from a rectangle generator (11) via a high-value resistor (12) at the one electrode (4), a measuring electrode (4), which test rectangle increases, by said measuring resistance (2), the measuring current in its positive half-wave, and decreases, by said measuring resistance (2), the measuring current in its negative half-wave, said fluctuating measuring currents being superimposed at the output of said peak detector (7) as a "ripple" of rectangular shape, and an RC low pass (13) downstream of said peak detector (7), which has a low limiting frequency and filters out said superimposed portion and supplies the pure measuring voltage to said output comparator (8), and an RC low pass (14) of higher limiting voltage, also disposed downstream of said peak detector (7), which supplies said overlapping portion to a comparator (15). which, by comparing said filtered measuring voltage and said superimposed portion, regenerates said steep-edge test rectangle and, via an RC high pass (16) (17), forms positive and negative needle pulses from said edges and superimposes them over the adjustable nominal voltage (9) at the output comparator, so that the polarity of each level-dependent output signal (10) is reversed in short intervals on the basis of a test frequency, and a user will be able to assess the presence of said test pulses at the output as a prerequisite for a proper functioning of all circuit components.

## Revendications

1. Capteur pour détecter sans contact le niveau de remplissage d'un milieu liquide et adhérent de conductivité élevée, en particulier du sang, à travers une paroi non métallique d'un contenant avec au moins une électrode,
**caractérisé par** un générateur d'impulsions (1) lequel, au moyen d'impulsions courtes inversées et non inversées, exactement opposées les unes aux autres, actionne, via deux résistances équivalentes de faible valeur ohmique (2, 3), deux électrodes (4, 5) identiques disposées l'une à côté de l'autre à la même hauteur par rapport au niveau de remplissage du milieu et fixées à la paroi extérieure du contenant, ainsi que par un amplificateur différentiel rapide à taux élevé de réjection de mode commun (6) lequel prélève une chute de tension engendrée par le courant d'impulsions dépendant du niveau de remplissage sur l'une des deux résistances (2, 3), résistance de mesure (2), amplifie cette chute de tension par un facteur fixe et l'achemine vers un détecteur de crête (7) disposé en aval avec filtrage pour obtenir une tension continue dépendant du niveau de remplissage ainsi que vers un comparateur de tension (8) placé en aval, lequel, en comparant la tension de sortie du détecteur de crête (7) avec une tension de consigne (9) réglable, engendre un signal de commutation qui passe de « l'état bas » à « l'état haut » dès que le niveau de remplissage monte de sorte que les électrodes (4, 5) sont suffisamment couvertes, et vice versa, lorsque le niveau de remplissage baisse en-dessous des électrodes (4, 5), ou qui réagit inversement à la modification du niveau de remplissage, dès que la polarité de l'un des échelons générateur d'impulsions (1), amplificateur différentiel (6), détecteur de crête (7) ainsi que comparateur de tension (8) change.

2. Capteur selon la revendication 1, **caractérisé en ce que** les impulsions courtes inversées et non inversées du générateur d'impulsions sont des impulsions à flancs raides.

3. Capteur selon la revendication 1 ou 2, **caractérisé en ce que** les électrodes (4, 5) présentent une forme géométrique adaptée à la paroi du contenant.

4. Capteur selon l'une des revendications précédentes, **caractérisé en ce que**, à l'issue d'une impulsion de mesure, l'amplificateur différentiel (6) est déclenché jusqu'au début de l'impulsion de mesure subséquente.

5. Capteur selon l'une des revendications précédentes, **caractérisé en ce que** la chute de tension à la deuxième résistance (3), elle aussi, est évaluée par un deuxième amplificateur différentiel (6a) identique à l'amplificateur différentiel à taux élevé de réjection de mode commun (6), mais dont les entrées sont connectées de façon inverse, et par un détecteur de crête (7b) également placé en aval et identique au détecteur de crête (7), et que les tensions de mesure des deux branches sont acheminées, via un réseau de totalisation consistant en deux résistances identiques, au comparateur de sortie commun (8) et les deux branches, elles aussi, sont surveillées par l'impulsion de contrôle.

6. Capteur selon la revendication 1, **caractérisé en ce que** la chute de tension produite au niveau de l'une des deux résistances (2) est amplifiée par le facteur fixe de l'ordre de 5 à 50.

7. Capteur pour détecter sans contact le niveau de remplissage d'un milieu liquide et adhérent de conductivité élevée, en particulier du sang, à travers une paroi non métallique d'un contenant avec au moins une électrode,
**caractérisé par** un générateur d'impulsions (1) engendrant des d'impulsions de courte durée qui, via une résistance de faible valeur ohmique (2), résistance de mesure, actionnent une électrode (4), électrode de mesure, fixée à la paroi extérieure du contenant, ainsi que par un amplificateur différentiel rapide à taux élevé de réjection de mode commun (6) lequel prélève une chute de tension engendrée par le courant d'impulsions dépendant du niveau de remplissage sur la résistance de mesure (2), amplifie cette chute de tension par un facteur fixe et l'achemine vers un détecteur de crête (7) disposé en aval avec filtrage pour obtenir une tension continue dépendant du niveau de remplissage ainsi que vers un comparateur de tension (8) placé en aval, lequel, en comparant la tension de sortie du détecteur de crête (7) avec une tension de consigne (9) réglable, engendre un signal de commutation qui passe de « l'état bas » à « l'état haut » dès que le niveau de remplissage monte de sorte que l'électrode de mesure (4) est suffisamment couverte, et vice versa, lorsque le niveau de remplissage baisse en-dessous de l'électrode de mesure (4), ou qui réagit inversément à la modification du niveau de remplissage, dès que la polarité de l'un des échelons générateur d'impulsions (1), amplificateur différentiel (6), détecteur de crête (7) ainsi que comparateur de tension (8) change, l'électrode de mesure (4) étant dotée d'une grille de protection (18) disposée à l'arrière et reliée à la sortie négative du générateur d'impulsions (1), et cet arrangement permettant d'effectuer des mesures asymétriques du niveau de remplissage par rapport à la terre.

8. Capteur selon l'une des revendications 1 à 7,
**caractérisé par** l'implémentation d'un système d'autosurveillance du fonctionnement en introduisant, au niveau de l'électrode (4), électrode de mesure (4), un signal carré de contrôle basse fréquence (10-200Hz) à l'aide d'un générateur de signaux carrés (11) via une résistance de valeur ohmique élevée (12), lequel signal, dans son alternance positive, augmente le courant de mesure à travers la résistance de mesure (2), et, dans son alternance négative, réduit le courant de mesure à travers la résistance de mesure (2), ces fluctuations du courant de mesure se superposant rectangulairement comme ondulation (« Ripple ») à la sortie du détecteur de crête (7) de la tension continue de mesure, et par un filtre RC passe-bas (13) de fréquence de coupure basse disposé en aval du détecteur de crête (7), qui élimine la portion superposée et achemine la seule tension de mesure vers le comparateur de sortie (8), ainsi que par un filtre RC passe-bas (14) de fréquence de coupure plus élevée, lui aussi placé en aval du détecteur de crête (7), qui achemine la portion superposée vers un comparateur (15) lequel, par comparaison de la tension de mesure filtrée avec la portion superposée, regénère le signal carré de contrôle à flancs raides et, via un filtre RC passe-haut (16) (17), forme des impulsions en pointe positives et négatives à partir des flancs pour les superposer à la tension de consigne réglable (9) appliquée au comparateur de sortie (8), de sorte que la polarité respective du signal de sortie (10) dépendant du niveau de remplissage change brièvement dans des intervalles de temps prédéfinis par la fréquence d'essai et que l'existence de ces impulsions de contrôle peut être évaluée par l'utilisateur à la sortie en tant que condition du bon fonctionnement de tous les composants du circuit.

9. Procédé pour détecter sans contact le niveau de remplissage d'un milieu liquide et adhérent de conductivité élevée, en particulier du sang, à travers une paroi non métallique d'un contenant avec au moins une électrode,
**caractérisé par** un générateur d'impulsions (1) lequel, au moyen d'impulsions courtes inversées et non inversées, exactement opposées les unes aux autres, actionne, via deux résistances équivalentes de faible valeur ohmique (2, 3), deux électrodes (4, 5) identiques disposées l'une à côté de l'autre à la même hauteur par rapport au niveau de remplissage du milieu et fixées à la paroi extérieure du contenant, en utilisant un amplificateur différentiel rapide à taux élevé de réjection de mode commun (6) lequel prélève une chute de tension engendrée par le courant d'impulsions dépendant du niveau de remplissage sur l'une des deux résistances (2, 3), résistance de mesure (2), amplifie cette chute de tension par un facteur fixe et l'achemine vers un détecteur de crête (7) disposé en aval avec filtrage pour obtenir une tension continue dépendant du niveau de remplissage ainsi que vers un comparateur de tension (8) placé en aval, lequel, en comparant la tension de sortie du détecteur de crête (7) avec une tension de consigne (9) réglable, engendre un signal de commutation qui passe de « l'état bas » à « l'état haut » dès que le niveau de remplissage monte de sorte que les électrodes (4, 5) sont suffisamment couvertes, et vice versa, lorsque le niveau de remplissage baisse en-dessous des électrodes (4, 5), ou qui réagit inversément à la modification du niveau de remplissage, dès que la polarité de l'un des échelons générateur d'impulsions (1), amplificateur différentiel (6), détecteur de crête (7) ainsi que comparateur de tension (8) change.

10. Procédé pour détecter sans contact le niveau de remplissage d'un milieu (35) liquide et adhérent de conductivité élevée, en particulier du sang, à travers une paroi non métallique d'un contenant avec au moins une électrode,
**caractérisé par** un générateur d'impulsions (1) engendrant des d'impulsions de courte durée qui, via une résistance de faible valeur ohmique (2), résistance de mesure, actionnent une électrode (4), électrode de mesure, fixée à la paroi extérieure du contenant, ainsi que par un amplificateur différentiel rapide à taux élevé de réjection de mode commun (6) lequel prélève une chute de tension engendrée par le courant d'impulsions dépendant du niveau de remplissage sur la résistance de mesure (2), amplifie cette chute de tension par un facteur fixe et l'achemine vers un détecteur de crête (7) disposé en aval avec filtrage pour obtenir une tension continue dépendant du niveau de remplissage ainsi que vers un comparateur de tension (8) placé en aval, lequel, en comparant la tension de sortie du détecteur de crête (7) avec une tension de consigne (9) réglable, engendre un signal de commutation qui passe de « l'état bas » à « l'état haut » dès que le niveau de remplissage monte de sorte que l'électrode de mesure (4) est suffisamment couverte, et vice versa, lorsque le niveau de remplissage baisse en-dessous de l'électrode de mesure (4), ou qui réagit inversément à la modification du niveau de remplissage, dès que la polarité de l'un des échelons générateur d'impulsions (1), amplificateur différentiel (6), détecteur de crête (7) ainsi que comparateur de tension (8) change, l'électrode de mesure (4) étant dotée d'une grille de protection (18) disposée à l'arrière et reliée à la sortie négative du générateur d'impulsions (1), et cet arrangement permettant d'effectuer des mesures asymétriques du niveau de remplissage par rapport à la terre.

11. Procédé selon la revendication 9 ou 10, **caractérisé par** l'implémentation d'un système d'autosurveillance du fonctionnement en introduisant, au niveau de l'électrode (4), électrode de mesure (4), un signal carré de contrôle basse fréquence (10-200Hz) à l'aide d'un générateur de signaux carrés (11) via une résistance de valeur ohmique élevée (12), lequel signal, dans son alternance positive, augmente le courant de mesure à travers la résistance de mesure (2), et, dans son alternance négative, réduit le courant de mesure à travers la résistance de mesure (2), ces fluctuations du courant de mesure se superposant rectangulairement comme ondulation (« Ripple ») à la sortie du détecteur de crête (7) de la tension continue de mesure, et par un filtre RC passe-bas (13) de fréquence de coupure basse disposé en aval du détecteur de crête (7), qui élimine la portion superposée et achemine la seule tension de mesure vers le comparateur de sortie (8), ainsi que par un filtre RC passe-bas (14) de fréquence de coupure plus élevée, lui aussi placé en aval du détecteur de crête (7), qui achemine la portion superposée vers un comparateur (15) lequel, par comparaison de la tension de mesure filtrée avec la portion superposée, regénère le signal carré de contrôle à flancs raides et, via un filtre RC passe-haut (16) (17), forme des impulsions en pointe positives et négatives à partir des flancs pour les superposer à la tension de consigne réglable (9) appliquée au comparateur de sortie (8), de sorte que la polarité respective du signal de sortie (10) dépendant du niveau de remplissage change brièvement dans des intervalles de temps prédéfinis par la fréquence d'essai et que l'existence de ces impulsions de contrôle peut être évaluée par l'utilisateur à la sortie en tant que condition du bon fonctionnement de tous les composants du circuit.
